# EUROPEAN PATENT APPLICATION

(11) **EP 3 135 421 A1**
(43) Date of publication of application: **01.03.2017**
(21) Application number: 15460050.6
(22) Date of filing: 22.08.2015
(51) Int. Cl.: B23K 9/32, B23K 9/167, B23K 9/00, B23K 9/028, B23K 9/29

(54) **SHIELDING GAS TOROIDAL NOZZLE**

(71) Applicant: METALKO Spolka. z o.o., 85-825 Bydgoszcz (PL)
(72) Inventor: Medaj, Daniel, 85-825 Bydgoszcz (PL); Gietka, Tomasz, 85-796 Bydgoszcz (PL); Ciechacki, Krzysztof, 85-792 Bydgoszcz (PL); Rzesny, Jan, 86-031 Osielsko-Niwy (PL)
(74) Representative: Jankowski, Piotr

(57) **Abstract**

The invention is a shielding gas toroidal nozzle designed for orbital welding of tubes to tube sheets, especially for heat exchangers, using non-consumable tungsten electrode in the atmosphere of inert gases, which has a toroidal body 1 in the form of a ring made of two races - external and internal - inside of which there are four longitudinal lenses 2 with an arc-shape that is compatible with the shape of the body 1, and in the inner part of the body 1, between longitudinal lenses 2, there is a cylindrical lens 3 which moves around the cylindrical perimeter of the body 1 in the symmetry axis where a torch 4 with a non-consumable electrode is mounted, and each of the four longitudinal lenses 2 and the cylindrical lens 3 are provided with shielding gas lines 6 that are connected with a diffuser 5.

## Description

The invention is a shielding gas toroidal nozzle designed for orbital welding of tubes to tube sheets, especially for heat exchangers, using non-consumable tungsten electrode in the atmosphere of an inert gas (TIG - tungsten inert gas; A-TIG - activated tungsten inert gas or GTAW - gas tungsten arc welding), such as argon, helium or the mixture of argon and helium.

Tubes and tube sheets are made of high-strength structural steel, stainless and acid-resistant steel, dual-phase duplex steel, as well as titanium and its alloys.

Tube sheets are often used in boiler and tank assemblies. First technical heat exchangers were heat boilers characterised by flame or combustion heating. At the next stage of their development, heat exchangers had double walls, between which a heating medium (heating steam or hot water) was supplied. Installing tube in tube sheets are performed with two methods: tube expansion and welding. Expansion of tubes in tube sheets should be done according to a previously established plan. If there are so called anchor tubes in a tube sheet, they should be expanded in the first place, and then the rest of the tubes should be expanded from the bottom to the top. The ends of the tubes to be installed in a tube sheet through expansion and welding should be cleaned on the outside and on the inside. Cleaning tube ends and tube sheet holes, as well as properly sized tubes ensure appropriate tightness after expansion. Expansion time equal to a tube diameter is considered to be enough to obtain a satisfactorily tight and strong connection. The method of welding tubes to tube sheets is used especially in cases where it is impossible to expand the tubes due to very thin walls (3 mm thick) of tube sheets. The lowest deformation of a tube sheet during welding can be achieved if the following welding sequence is adhered to: radially or spirally from the centre of the tube sheet and to the outside of the jacket. Each tube installed in a tube sheet is welded separately. Welding is performed with the use of welding heads.

Shield rings with seals on both sides used during orbital welding of tubes with tube sheets are well-known. The shield ring is inserted in a tube and the seals create two walls, the purpose of which is to reduce the space to which a shielding gas is supplied. The entire space between the seals is filled with a shielding gas.

The known solutions protect the root of a weld at the entire perimeter with the same shielding gas flow value. The shielding gas must fill the entire space between the shield rings.

A drawback of these solutions is a fact that in order to shield the welding point, we have to fill the entire space between the rings; the shield is the same at the entire perimeter of the tube. In the case of the butt welding of two tubes or a tube with an elbow, this solution is feasible. However, the problem arises when we are welding a classic tube sheet made of a tube and a perforated plate with a hole.

Shielding gas toroidal nozzle constructed according to the invention solves the problem of shielding a currently welded point and its vicinity.

The solution lies in a structure of the nozzle, which, during the welding process, provides continuous supply of shielding gas to the heat-affected zone, which is exposed to oxidation due to high reactivity of alloy elements with the ambient air, during the welding of high-alloy steel, as well as titanium and its alloys in order to protect the welding joint from oxidation and to evenly cool the joint after welding, as well as to reduce the amount of gas needed to shield the joint during welding, through the use a local shielding by installing cylindrical lenses. The gas is supplied through shielding gas diffuser, which, at the time, powers the cylindrical lenses, between which there is a non-consumable electrode. Four cylindrical lenses are located in a toroidal body and each lens has its own shielding gas supply line, connected to the diffuser which only distributes shielding gas to two lenses at a time, between which there is a non-consumable electrode. Geometric dimensions of the toroidal body along with cylindrical lenses are adjusted to the diameter of the tubes welded to tube sheets.

The nozzle has toroidal body 1 in the form of a ring consisting of two races - external and internal - inside of which, between external and internal races, there are four longitudinal lenses 2 with an arc shape that is compatible with the shape of the body 1. In the inner part of the body 1, between the longitudinal lenses 2, there is a cylindrical lens 3, although its exact position depends on a current welding point and it moves around the cylindrical perimeter of the body 1.

At the symmetry axis of the lens 3, there is a torch 4, where a non-consumable electrode is installed. There are shielding gas supply lines 6 connected to each of the four longitudinal lenses 2 and the cylindrical lens 3. The lines 6 are connected to each other - outside the toroidal body 1 - with the shielding gas diffuser 5, which supplies the shielding gas to the cylindrical lens 3 and to the two longitudinal lenses 2, between which the cylindrical lens 3 is situated.

This way the shielding gas protects and cools the joint before and after welding at a half of the perimeter of the exchanger tube.

Toroidal body 1 and longitudinal lenses 2 are made of heat-resistant steel; the cylindrical lens 3 can be made of cordierite or heat-resistant steel. It mainly depends on the diameter of the torch 4.

The advantage of the nozzle pursuant to the invention is to protect the area surrounding a non-consumable electrode during welding from oxidation and to reduce the use of a shielding gas. Installing toroidal lenses and shielding gas diffuser in the body allows reducing the use of a shielding gas by 70% in comparison to known methods, such as using a ring. The solutions proposed by the invention allows welding boiler tubes fitted to tube sheets in heat exchanger, using an orbital welding power supply. It means that the rotation of the welding torch is compatible and welding power supply is kept at a constant level and can be changed at the perimeter of the tube.

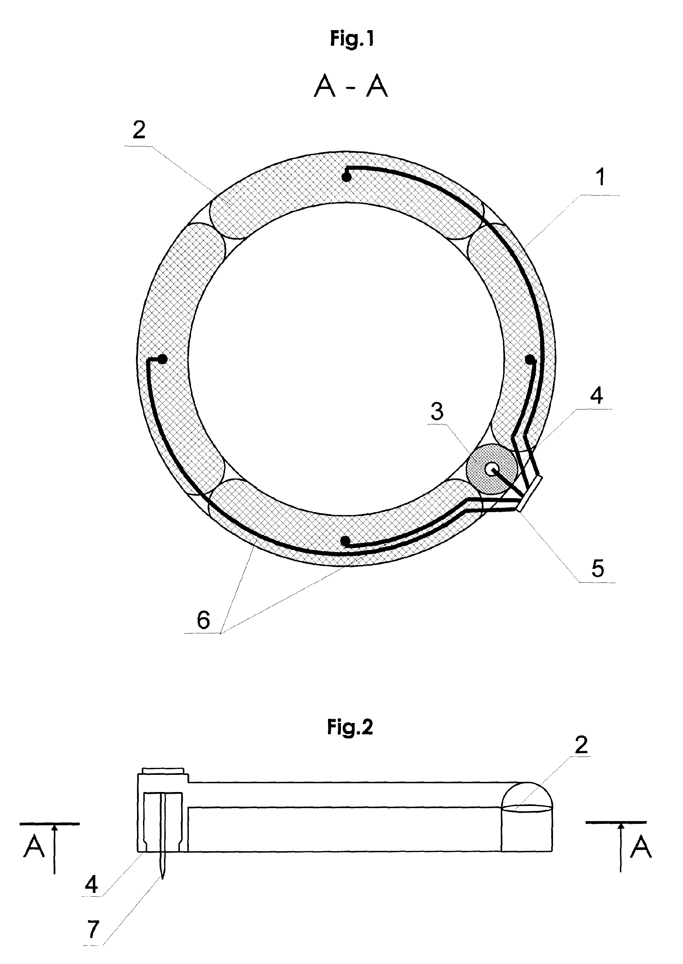

The embodiment of the nozzle is illustrated on the visual material attached, where Fig. 1 is the cross-section of the nozzle and Fig. 2 - the front view.

The nozzle comprises a toroidal body 1, longitudinal lenses 2, a cylindrical lens 3, a torch 4, a shielding gas diffuser 5, shielding gas diffuser lines 6, and a non-consumable electrode 7.

The nozzle pursuant to the invention has been presented in more details as exemplified by the embodiment and in working conditions. An external body is mounted between three bolts - internal ring. In the symmetry axis between the external and internal rings there is the symmetry axis of the welded joint. Distance of the torch 4 with the non-consumable electrode 7 is set by head bolts. The shielding gas toroidal nozzle is independent from welding head. The element that joins the nozzle with the head is the torch 4 with the non-consumable electrode 7. Toroidal body 1 has the form of a ring that is made of two races - external and internal - between which there are four longitudinal lenses 2 with an arc shape compatible with the shape of the body 1, while in the inner part of the body 1, between longitudinal lenses 2, there is a cylindrical lens 3 and its position depends on a current welding point and it moves around the cylindrical perimeter of the body 1. The toroidal body 1, longitudinal lenses 2, and the cylindrical lens are made of heat-resistant steel. In the symmetry axis of the lens 3, there is the torch 4 with a tungsten (non-consumable) electrode 4. During the welding process the toroidal body 1 does not move (stays in one position) and the torch moves along the perimeter with constant or variable speed. The shielding gas is distributed, using the lines 6 in the form of hoses installed at the external surface of the body. Connected to each other by the shielding gas diffuser, only two lenses are active at a time, and the diffuser 5 supplies the gas to the lens 3 and these two lenses 2 between which the lens 3 is currently situated in a given angular position, thus shielding and cooling the joint before and after welding on a half of the exchanger tube.

## Claims

1. A shielding gas toroidal nozzle having a toroidal body 1 in the form of a ring made of two races - external and internal - inside of which there are four longitudinal lenses 2 with an arc-shape that is compatible with the shape of the body 1, and in the inner part of the body 1, between longitudinal lenses 2, there is a cylindrical lens 3 which moves around the cylindrical perimeter of the body 1 in the symmetry axis where a torch 4 with a non-consumable electrode is mounted, and each of the four longitudinal lenses 2 and the cylindrical lens 3 are provided with shielding gas lines 6 that are connected with a diffuser 5.

2. The toroidal nozzle of claim 1, wherein the diffuser 5 supplies the shielding gas to the cylindrical lens and to the two of longitudinal lenses 2 between which the lens 3 is currently situated in a given angular position.
